# EUROPEAN PATENT SPECIFICATION

(11) **EP 3 040 380 B1**
(45) Date of publication and mention of the grant of the patent: **25.02.2026**
(21) Application number: 14839741.7
(22) Date of filing: 19.08.2014
(51) Int. Cl.: C08L 69/00, C08K 3/32, C08L 83/10

(54) **POLYCARBONATE RESIN COMPOSITION AND MOLDED ARTICLE**
POLYCARBONATHARZZUSAMMENSETZUNG UND FORMARTIKEL
COMPOSITION DE RÉSINE POLYCARBONATE ET ARTICLE MOULÉ

(30) Priority: 29.08.2013 JP 2013178227
(43) Date of publication of application: 06.07.2016
(73) Proprietor: Idemitsu Kosan Co., Ltd, Tokyo 100-8321 (JP)
(72) Inventor: AOKI, Yusuke, Ichihara-shi Chiba 299-0193 (JP)
(74) Representative: Hoffmann Eitle
(86) International application number: PCT/JP2014/071681
(87) International publication number: WO 2015/029841

(56) References cited:
- EP-A1- 2 716 713
- EP-A1- 2 896 655
- EP-B1- 2 896 655
- WO-A1-2010/016348
- WO-A1-2011/062105
- WO-A1-2012/165373
- WO-A1-2012/165373
- WO-A1-2013/128931
- WO-A1-2014/042252
- JP-A- 2011 088 377
- US-A1- 2011 245 389
- US-A1- 2012 108 739
- DATABASE WPI Week 201136, Derwent World Patents Index; AN 2011-F62143, XP002767424

## Description

### Technical Field

The present invention relates to a polycarbonate-based resin composition, a molded body, which is produced by molding the resin composition, and a member for portable information terminals, including the molded body.

### Background Art

A polycarbonate resin has been widely utilized as an engineering plastic in various fields, such as an electrical and electronic equipment field, and an automobile field, because the resin is excellent in, for example, transparency, impact resistance, and dimensional stability. In addition, the polycarbonate resin is utilized in a casing for a cellular phone, a smart phone, a tablet terminal, a mobile personal computer, a digital camera, a video camera, an electric power tool, and the like. In those applications, an impact-resisting characteristic (particularly under a low-temperature environment) is important because such products may, for example, fall at the time of their handling. In addition, a design property (especially a color) and chemical resistance are important factors.

With regard to the design property (especially the color), a polycarbonate resin having transparency is suitable because it is important that the depth, high-grade sense, and the like of the color can be easily expressed, and coloring can be performed with relative ease. In addition, various investigations including compositing with a polyester resin, such as polyethylene terephthalate (see, for example, Patent Literatures 1 to 3), have been made on a polycarbonate resin assumed to be used in the applications for improving its chemical resistance. However, its impact-resisting characteristic is insufficient.

Meanwhile, a polycarbonate-polyorganosiloxane copolymer (hereinafter referred to as "PC-POS") obtained by copolymerizing a polyorganosiloxane has been known (see, for example, Patent Literature 4). The PC-POS has been expected to be applied to the applications because of its excellent balance between its impact resistance and transparency.

Patent Literature 5 discloses a composition comprising (A) 100 parts by mass of an aromatic polycarbonate resin containing a polycarbonate polyorganosiloxane copolymer, (B) 30-100 parts by mass of graphite, (C) 1-10 parts by mass of polytetrafluoroethylenes, and (D) 0.05-1 part by mass of an organic alkali metal salt and/or organic alkaline-earth metal salt.

Patent Literature 6 discloses a resin composition, which contains a polycarbonate-polyorganosiloxane copolymer having a specific structure, and a molded article using the resin composition.

Patent Literature 7 discloses a polycarbonate resin composition for a battery pack and a battery pack.

Patent Literature 8 discloses a polycarbonate resin composition and a molded product thereof.

### Citation List

### Patent Literature

PTL 1: JP 2012-77239 A
PTL 2: JP 2007-23118 A
PTL 3: JP 2009-1620 A
PTL 4: JP 2662310 B2
PTL 5: WO 2011/062105 A1
PTL 6: US 2012/0108739 A1
PTL 7: WO 2012/165373 A1
PTL 8: US 2011/0245389 A1

### Summary of Invention

### Technical Problem

The PC-POS has been used as an exterior member (a casing or a protective case) for portable information terminals, such as a cellular phone, a smart phone, and a tablet terminal. Those portable information terminals have often been used outdoors, and have often come into contact with a skin having applied thereto a sunscreen. Particularly in a bathing beach or the like, a portable information terminal may be used after a large amount of the sunscreen has been used. In addition, in a daily life, when a portable information terminal, such as a cellular phone, is frequently used with a hand having applied thereto the sunscreen, the sunscreen accumulates in an exterior member for the portable information terminal equipment to cause problems, such as the occurrence of a crack and the peeling of the painting of the exterior member, in its long-term use.

The sunscreen contains, for example, a UV absorber, a UV-scattering agent, and a solvent, an emulsifying agent, an oil solution, and an additive to be generally used in a skin external preparation, and it is assumed that these components adversely affect a polycarbonate resin.

In view of the foregoing, an object of the present invention is to provide a polycarbonate resin composition that can provide a molded body excellent in sunscreen resistance and impact resistance. Another object of the present invention is to provide a molded body excellent in sunscreen resistance and impact resistance.

### Solution to Problem

The inventor of the present invention has made extensive investigations, and as a result, has found that a resin composition containing a PC-POS having a specific number of siloxane repeating units and containing a specific amount of a siloxane repeating unit out of the PC-POS's each of which is known to be excellent in balance between its impact resistance and transparency serves as a resin composition excellent in sunscreen resistance and impact-resisting characteristic. Thus, the inventor has completed the present invention.

That is, the present invention relates to the following items [1] to [8].
[1] A polycarbonate resin composition having sunscreen resistance, comprising a blend of: 100 parts by mass of (A) a polycarbonate resin comprising a polycarbonate-polyorganosiloxane copolymer (A-1) comprising, in a main chain thereof, a repeating unit represented by the general formula (I) and a repeating unit represented by the general formula (II), wherein n=30 to 150, the component (A) having a content of the repeating unit represented by the general formula (II) of from 1.1 mass% to 2.9 mass%, and the component (A) having a viscosity-average molecular weight of from 19,500 to 24,000 calculated from Schnell's equation, [η]= 1.23×10⁻⁵×Mv^{0.83}, by measuring the limiting viscosity [η] of a methylene chloride solution at 20°C in a Ubbelohde-type viscosmeter tube; and 0.001 part by mass to 2 parts by mass of (B) an antioxidant. 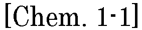 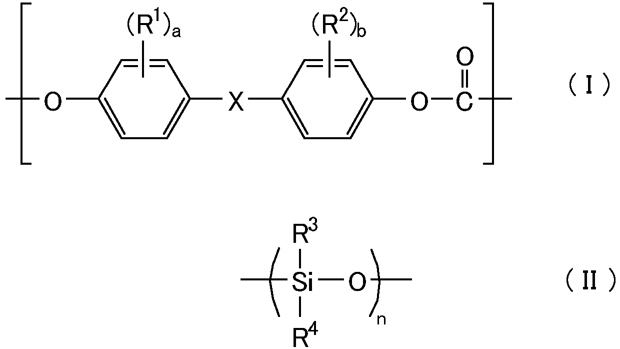 In the formulae:
   R¹ and R² each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, -SO₂-, -O-, or -CO-, and a and b each independently represent an integer of from 0 to 4; and
   R³ and R⁴ each independently represent a hydrogen atom, a halogen atom, an alkyl group having 1 to 6 carbon atoms, an alkoxy group having 1 to 6 carbon atoms, or an aryl group having 6 to 12 carbon atoms, and n represents an average number of repetitions.
[2] The polycarbonate resin composition according to Item [1], wherein the antioxidant serving as the component (B) comprises a phosphorus-based antioxidant.
[3] A molded body, which is produced by molding the polycarbonate resin composition of Item [1] or [2].
[4] A casing for portable information terminals, comprising the molded body of Item [3].
[5] A protective case for portable information terminals, comprising the molded body of Item [3].
[6] A use of the polycarbonate resin composition as defined in Item [1] or [2] for producing a molded body.
[7] The use according to Item [6], wherein the molded body is a member for portable information terminals or a protective case.

### Effects of Invention

According to one embodiment of the present invention, the polycarbonate resin composition that can provide a molded body excellent in sunscreen resistance and impact resistance can be provided. According to another embodiment of the present invention, the molded body excellent in sunscreen resistance and impact resistance can be provided.

### Description of Embodiments

A polycarbonate resin composition of the present invention is a polycarbonate resin composition containing 100 parts by mass of the following specific component (A) and 0.001 parts by mass to 2 parts by mass of the following specific component (B), other components being each 10 parts by mass or less with respect to 100 parts by mass of the component (A).

The components contained in the polycarbonate resin composition of the present invention are described in detail below. It should be noted that in this description, a provision considered to be preferred can be arbitrarily adopted and a combination of preferred provisions can be said to be more preferred.

### [(A) Polycarbonate Resin]

A polycarbonate resin serving as the component (A) contains a PC-POS (A-1) containing, in a main chain thereof, a repeating unit represented by the general formula (I) and a repeating unit represented by the general formula (II), wherein n=30 to 150.

One kind of the PC-POS's (A-1) may be used alone, or two or more kinds thereof may be used in combination.

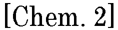

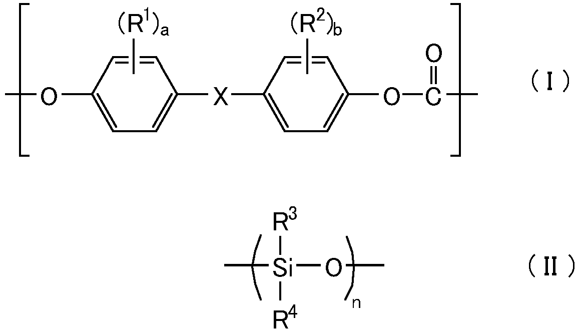

In the formulae:
R¹ and R² each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, -SO₂-, -O-, or -CO-, and a and b each independently represent an integer of from 0 to 4; and
R³ and R⁴ each independently represent a hydrogen atom, a halogen atom, an alkyl group having 1 to 6 carbon atoms, an alkoxy group having 1 to 6 carbon atoms, or an aryl group having 6 to 12 carbon atoms, and n represents an average number of repetitions.

Examples of the halogen atom that R¹ and R² in the general formula (I) each independently represent include a fluorine atom, a chlorine atom, a bromine atom, and an iodine atom.

Examples of the alkyl group that R¹ and R² each independently represent include a methyl group, an ethyl group, a n-propyl group, an isopropyl group, various butyl groups ("various" means that a linear group and any branched group are included, and the same shall apply hereinafter), various pentyl groups, and various hexyl groups. An example of the alkoxy group that R¹ and R² each independently represent is an alkoxy group whose alkyl group moiety is the alkyl group described above.

R¹ and R² each preferably represent an alkyl group having 1 to 4 carbon atoms or an alkoxy group having 1 to 4 carbon atoms.

Examples of the alkylene group represented by X include a methylene group, an ethylene group, a trimethylene group, a tetramethylene group, and a hexamethylene group, and an alkylene group having 1 to 5 carbon atoms is preferred. Examples of the alkylidene group represented by X include an ethylidene group and an isopropylidene group. Examples of the cycloalkylene group represented by X include a cyclopentanediyl group, a cyclohexanediyl group, and a cyclooctanediyl group, and a cycloalkylene group having 5 to 10 carbon atoms is preferred. Examples of the cycloalkylidene group represented by X include a cyclohexylidene group, a 3,5,5-trimethylcyclohexylidene group, and a 2-adamantylidene group, a cycloalkylidene group having 5 to 10 carbon atoms is preferred, and a cycloalkylidene group having 5 to 8 carbon atoms is more preferred. As an aryl moiety of the arylalkylene group represented by X, there are given, for example, aryl groups each having 6 to 14 ring-forming carbon atoms, such as a phenyl group, a naphthyl group, a biphenyl group, and an anthryl group. As an aryl moiety of the arylalkylidene group represented by X, there are given, for example, aryl groups each having 6 to 14 ring-forming carbon atoms, such as a phenyl group, a naphthyl group, a biphenyl group, and an anthryl group.

a and b each independently represent an integer of from 0 to 4, preferably from 0 to 2, more preferably 0 or 1.

Examples of the halogen atom that R³ and R⁴ in the general formula (II) each independently represent include a fluorine atom, a chlorine atom, a bromine atom, and an iodine atom. Examples of the alkyl group or alkoxy group that R³ and R⁴ each independently represent include the same examples as those in the case of R¹ and R². Examples of the aryl group that R³ and R⁴ each independently represent include a phenyl group and a naphthyl group.

It should be noted that R³ and R⁴ each preferably represent a hydrogen atom, an alkyl group having 1 to 6 carbon atoms, an alkoxy group having 1 to 6 carbon atoms, or an aryl group having 6 to 12 carbon atoms, and each more preferably represent a methyl group.

As described later, the component (A) may contain, as a component (A-2), a polycarbonate-based resin that does not correspond to the component (A-1).

Here, the blending ratio of the component (A-1) only needs to be adjusted so that the content of the unit represented by the general formula (II) in the polycarbonate resin (A) may be from 1.1 mass% to 2.9 mass%. For example, the content of the component (A-1) in the component (A), which is not particularly limited, is preferably 30 mass% or more, more preferably 50 mass% or more, still more preferably 70 mass% or more, particularly preferably 90 mass% or more.

A structure containing a repeating unit represented by the general formula (II) is preferably a structure represented by the following general formula (II').

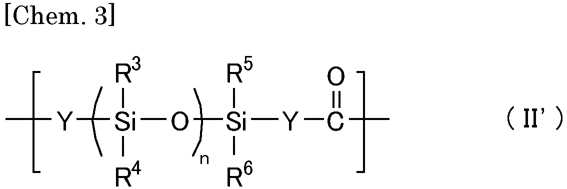

In the formula (II'), R³ to R⁶ each independently represent a hydrogen atom, a halogen atom, an alkyl group having 1 to 6 carbon atoms, an alkoxy group having 1 to 6 carbon atoms, or an aryl group having 6 to 12 carbon atoms, Y represents a single bond, or an organic residue containing an aliphatic or aromatic moiety, and n represents an average number of repetitions.

R³ to R⁶ each preferably represent a hydrogen atom, an alkyl group having 1 to 6 carbon atoms, an alkoxy group having 1 to 6 carbon atoms, or an aryl group having 6 to 12 carbon atoms. Y preferably represents a residue of a phenol-based compound having an alkyl group, and more preferably represents an organic residue derived from allylphenol or an organic residue derived from eugenol.

In addition, the structure containing a repeating unit represented by the general formula (II) is preferably the following formula (II").

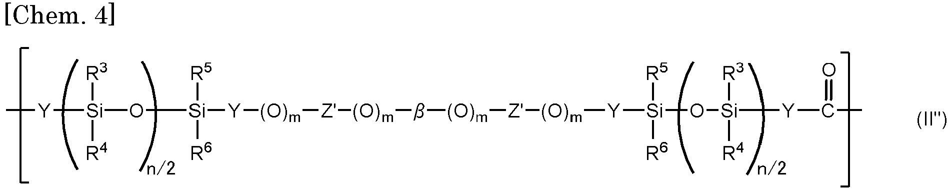

In the formula (II"), R³ to R⁶, Y, and n are identical to those in the general formula (II'), and preferred ones thereof are also the same as those in the formula.

m represents 0 or 1.

Z' represents -R⁷O-, -R⁷COO-, -R⁷NH-, -COO-, or -S-, and the R⁷ represents a linear, branched, or cyclic alkylene group, an aryl-substituted alkylene group, an aryl-substituted alkylene group that may have an alkoxy group on a ring thereof, or an arylene group.

In addition, β represents a divalent group derived from a diisocyanate compound or a divalent group derived from a dicarboxylic acid. Specific examples of the divalent group derived from a diisocyanate compound and the divalent group derived from a dicarboxylic acid are described later.

In the PC-POS (A-1), the average number of repetitions (n) in the constituent unit represented by the general formula (II) is from 30 to 150. When the average number of repetitions (n) is less than 30, the sunscreen resistance (chemical resistance) and the impact resistance at low temperature reduce. When the average number of repetitions (n) is more than 500, the viscosity of a raw material polyorganosiloxane becomes so high that its handling upon production of the copolymer becomes difficult. The average number of repetitions (n) is set to fall within the range of from 30 to 150 from the viewpoint of the production of a molded body having transparency.

A value for the average number of repetitions (n) in the constituent unit represented by the general formula (II) is a value calculated by nuclear magnetic resonance (NMR) measurement.

Both of the sunscreen resistance and the impact resistance can be made excellent by using such specific PC-POS (A-1), and mixing a predetermined amount of the component (B) to be described later.

The PC-POS (A-1) has a viscosity-average molecular weight (Mv) of from 19,500 to 24,000. As long as the viscosity-average molecular weight of the PC-POS falls within the range, the impact resistance of a molded body thereof becomes sufficient, the viscosity of the PC-POS does not become excessively large and productivity at the time of its production becomes stable, and the PC-POS can be easily molded into a thin body.

It should be noted that, in the present invention, the viscosity-average molecular weight (Mv) is a value calculated from Schnell's equation ([η]=1.23×10⁻⁵×Mv^{0.83}) by measuring the limiting viscosity [η] of a methylene chloride solution at 20°C in a Ubbelohde-type viscometer tube.

In the present invention, from the viewpoint of improving the sunscreen resistance (chemical resistance) and the impact resistance, the content of the repeating unit represented by the general formula (II) in the PC-POS (A-1) in the component (A) is from 1.1 mass% to 2.9 mass%, preferably from 1.2 mass% to 2.8 mass%. It should be noted that when the content of the repeating unit represented by the general formula (II) in the component (A) is less than 1.0 mass%, the impact resistance at low temperature reduces and the sunscreen resistance also reduces, and when the content is more than 3.0 mass%, the sunscreen resistance reduces.

Here, the content of the repeating unit represented by the general formula (II) in the component (A) is a value calculated by nuclear magnetic resonance (NMR) measurement.

A method of producing the PC-POS (A-1) is not particularly limited, and each of the PC-POS's can be easily produced with reference to a known production method for a PC-POS, such as a method described in JP 2010-241943 A.

Specifically, each of the PC-POS's can be produced by: dissolving an aromatic polycarbonate oligomer produced in advance and a polyorganosiloxane having a reactive group at a terminal thereof in a water-insoluble organic solvent (such as methylene chloride); adding an aqueous alkaline compound solution (such as aqueous sodium hydroxide) of a dihydric phenol-based compound represented by the following general formula (1) (such as bisphenol A) to the solution; and subjecting the mixture to an interfacial polycondensation reaction through the use of a tertiary amine (such as triethylamine) or a quaternary ammonium salt (such as trimethylbenzylammonium chloride) as a polymerization catalyst in the presence of a terminal stopper (a monohydric phenol, such as *p*-*t*-butylphenol). It should be noted that the content of the repeating unit represented by the general formula (II) can be adjusted to fall within the range by, for example, adjusting the usage amount of a polyorganosiloxane represented by the following general formula (2).

After the interfacial polycondensation reaction, the resultant is appropriately left at rest to be separated into an aqueous phase and a water-insoluble organic solvent phase [separating step], the water-insoluble organic solvent phase is washed (preferably washed with a basic aqueous solution, an acidic aqueous solution, and water in the stated order) [washing step], and the resultant organic phase is concentrated [concentrating step], pulverized [pulverizing step], and dried [drying step]. Thus, the PC-POS can be obtained.

In addition, the PC-POS can be produced by copolymerizing a dihydric phenol represented by the following general formula (1), a polyorganosiloxane represented by the following general formula (2), and phosgene, a carbonate, or a chloroformate.

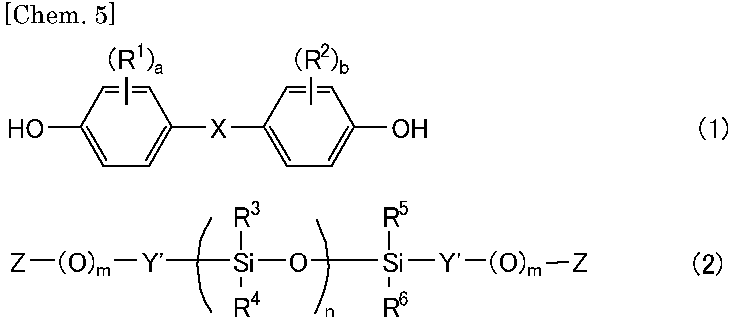

Here, in the general formula (1), R¹ and R², X, a, and b are the same as those in the general formula (I), and in the general formula (2), R³ to R⁶ are the same as those in the general formula (II'), n is the same as that in the general formula (II), and Y' is the same as Y in the general formula (II').

m represents 0 or 1, Z represents a halogen atom, -R⁷OH, -R⁷COOH, -R⁷NH₂, -COOH, or -SH, and R⁷ represents a linear, branched, or cyclic alkylene group, an aryl-substituted alkylene group, an aryl-substituted alkylene group that may have an alkoxy group on a ring thereof, or an arylene group.

Y' preferably represents a single bond, or an organic residue including an aliphatic moiety or an aromatic moiety, the organic residue being bonded to Si and O or to Si and Z. R³ to R⁶ each preferably represent a hydrogen atom, an alkyl group having 1 to 6 carbon atoms, an alkoxy group having 1 to 6 carbon atoms, or an aryl group having 6 to 12 carbon atoms. n is the same as that in the foregoing, and m represents 0 or 1.

Z preferably represents -R⁷OH, -R⁷COOH, -R⁷NH₂, -COOH, or -SH. The R⁷ is the same as that in the foregoing and represents a linear, branched, or cyclic alkylene group, an aryl-substituted alkylene group, an aryl-substituted alkylene group that may have an alkoxy group on a ring thereof, or an arylene group.

The dihydric phenol represented by the general formula (1) as a raw material for the PC-POS is not particularly limited, but is suitably 2,2-bis(4-hydroxyphenyl)propane [trivial name: bisphenol A]. When bisphenol A is used as the dihydric phenol, in the resultant PC-POS, X represents an isopropylidene group and a=b=0 in the general formula (I).

Examples of the dihydric phenol except bisphenol A include: bis(hydroxyaryl)alkanes, such as bis(4-hydroxyphenyl)methane, 1,1-bis(4-hydroxyphenyl)ethane, 2,2-bis(4-hydroxyphenyl)butane, 2,2-bis (4-hydroxyphenyl)octane, bis(4-hydroxyphenyl)phenylmethane, bis (4-hydroxyphenyl)diphenylmethane, 2,2-bis(4-hydroxy-3-methylphenyl)propane, bis(4-hydroxyphenyl)naphthylmethane, 1,1-bis(4-hydroxy-*t*-butylphenyl)propane, 2,2-bis(4-hydroxy-3-bromophenyl)propane, 2,2-bis(4-hydroxy-3,5-dimethylphenyl) propane, 2,2-bis(4-hydroxy-3-chlorophenyl)propane, 2,2-bis (4-hydroxy-3,5-dichlorophenyl)propane, and 2,2-bis(4-hydroxy-3,5-dibromophenyl)propane; bis(hydroxyaryl)cycloalkanes, such as 1,1-bis (4-hydroxyphenyl)cyclopentane, 1,1-bis(4-hydroxyphenyl)cyclohexane, 1,1-bis(4-hydroxyphenyl)-3,5,5-trimethylcyclohexane, 2,2-bis(4-hydroxyphenyl)norbornane, and 1,1-bis(4-hydroxyphenyl)cyclododecane; dihydroxyaryl ethers, such as 4,4'-dihydroxydiphenyl ether and 4,4'-dihydroxy-3,3'-dimethylphenyl ether; dihydroxydiaryl sulfides, such as 4,4'-dihydroxydiphenyl sulfide and 4,4'-dihydroxy-3,3'-dimethyldiphenyl sulfide; dihydroxydiaryl sulfoxides, such as 4,4'-dihydroxydiphenyl sulfoxide and 4,4'-dihydroxy-3,3'-dimethyldiphenyl sulfoxide; dihydroxydiaryl sulfones, such as 4,4'-dihydroxydiphenyl sulfone and 4,4'-dihydroxy-3,3'-dimethyldiphenyl sulfone; dihydroxydiphenyls, such as 4,4'-dihydroxydiphenyl; dihydroxydiarylfluorenes, such as 9,9-bis (4-hydroxyphenyl)fluorene and 9,9-bis(4-hydroxy-3-methylphenyl)fluorene; dihydroxydiaryladamantanes, such as 1,3-bis(4-hydroxyphenyl)adamantane, 2,2-bis(4-hydroxyphenyl)adamantane, and 1,3-bis(4-hydroxyphenyl)-5,7-dimethyladamantane; 4,4'-[1,3-phenylenebis(1-methylethylidene)]bisphenol; 10,10-bis(4-hydroxyphenyl)-9-anthrone; and 1,5-bis(4-hydroxyphenylthio)-2,3-dioxapentaene.

One kind of those dihydric phenols may be used alone, or two or more kinds thereof may be used as a mixture.

The polyorganosiloxane represented by the general formula (2) can be easily produced by subjecting a phenol having an olefinically unsaturated carbon-carbon bond (preferably vinylphenol, allylphenol, eugenol, isopropenylphenol, or the like) to a hydrosilanation reaction with a terminal of a polyorganosiloxane chain having a predetermined polymerization degree (n; number of repetitions). The phenol is more preferably allylphenol or eugenol.

The polyorganosiloxane represented by the general formula (2) is preferably one in which R³ to R⁶ each represent a methyl group.

Examples of the polyorganosiloxane represented by the general formula (2) include compounds represented by the following general formulae (2-1) to (2-9).

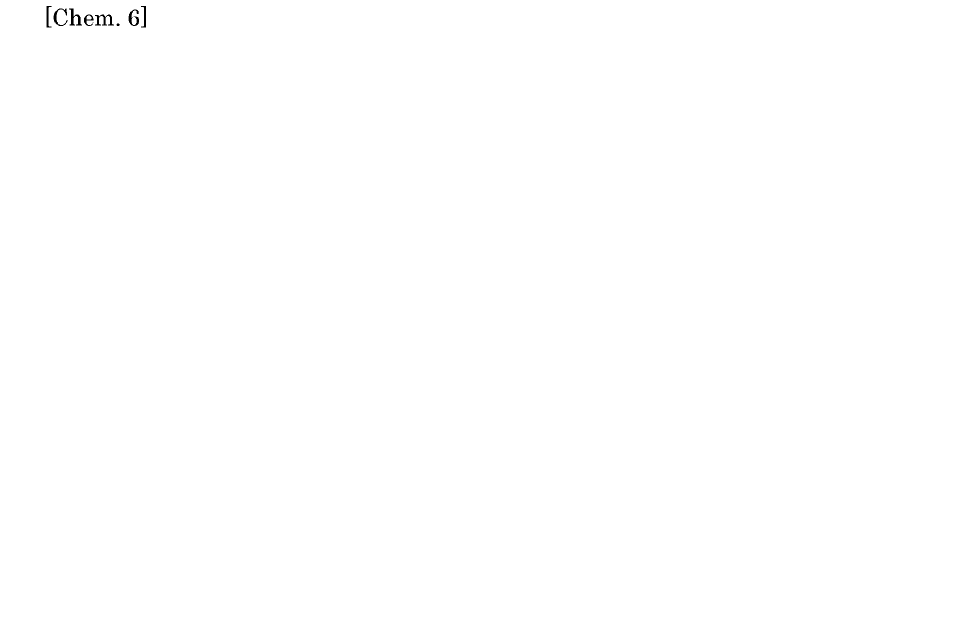

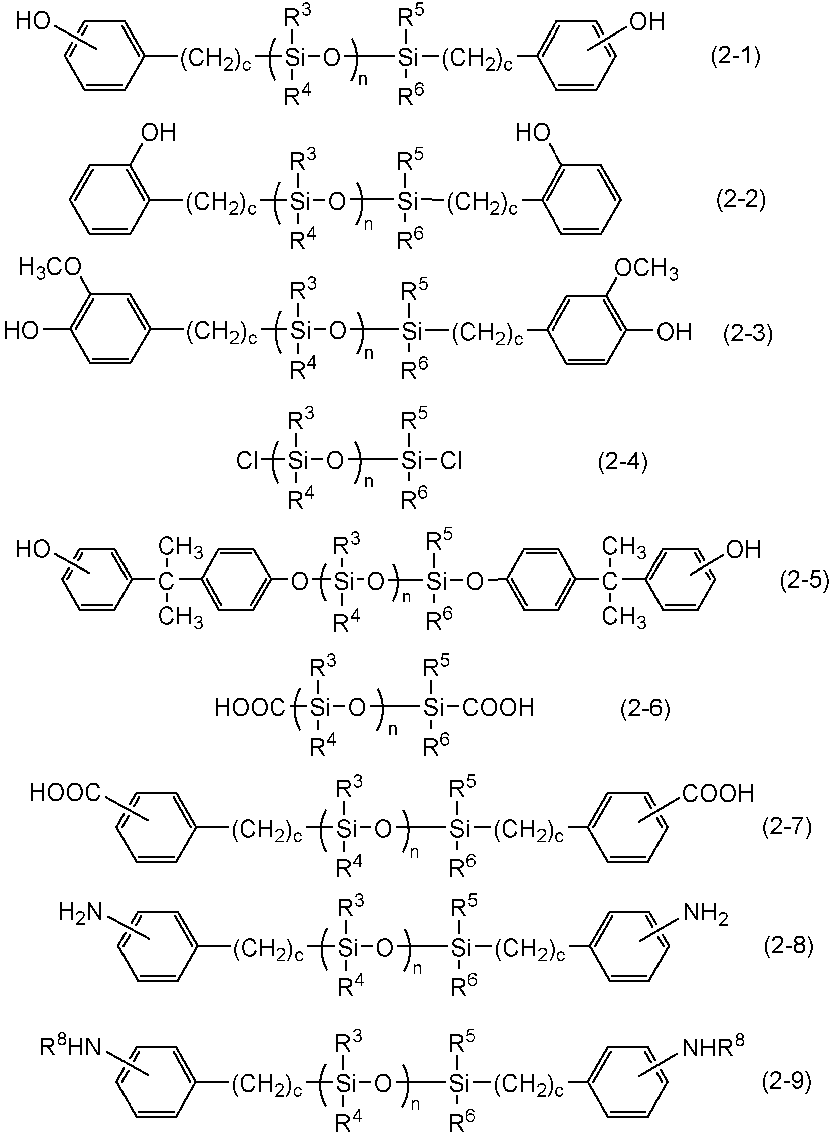

In the general formulae (2-1) to (2-9), R³ to R⁶, and n are as defined in the foregoing, and preferred ones thereof are also the same as those in the foregoing. In addition, R⁸ represents an alkyl group, an alkenyl group, an aryl group, or an aralkyl group, and c represents a positive integer and typically represents an integer of from 1 to 6.

In addition, R⁸ preferably represents an alkyl group, an alkenyl group, an aryl group, or an aralkyl group.

Among them, a phenol-modified polyorganosiloxane represented by the general formula (2-1) is preferred from the viewpoint of its ease of polymerization. In addition, an α,ω-bis[3-(*o*-hydroxyphenyl)propyl]polydimethylsiloxane as one kind of phenol-modified polyorganosiloxane represented by the general formula (2-2) or an α,ω-bis[3-(4-hydroxy-3-methoxyphenyl)propyl]polydimethylsiloxane as one kind of phenol-modified polyorganosiloxane represented by the general formula (2-3) is preferred from the viewpoint of its ease of availability.

The phenol-modified polyorganosiloxane can be produced by a known method. For example, the following method is given as the production method.

First, cyclotrisiloxane and disiloxane are caused to react with each other in the presence of an acid catalyst to synthesize an α,ω-dihydrogen organopolysiloxane. At this time, an α,ω-dihydrogen organopolysiloxane having a desired average number of repetitions can be synthesized by changing a blending ratio between cyclotrisiloxane and disiloxane. Next, the α,ω-dihydrogen organopolysiloxane is subjected to an addition reaction with a phenol compound having an unsaturated aliphatic hydrocarbon group, such as allylphenol or eugenol, in the presence of a catalyst for a hydrosilylation reaction, whereby a phenol-modified polyorganosiloxane having a desired average number of repetitions can be produced.

In addition, at this stage, a cyclic polyorganosiloxane having a low molecular weight and an excessive amount of the phenol compound remain as impurities. Accordingly, those low-molecular weight compounds are preferably removed by distillation with heating under reduced pressure.

Further, the PC-POS may be a copolymer produced by copolymerizing the dihydric phenol represented by the general formula (1), a polyorganosiloxane represented by the following general formula (3), and phosgene, a carbonate, or a chloroformate. The polyorganosiloxane represented by the general formula (3) is a product of a reaction between the polyorganosiloxane represented by the general formula (2) and a diisocyanate compound or a dicarboxylic acid.

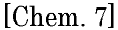

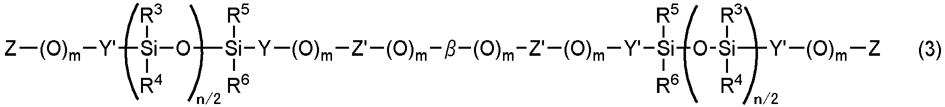

In the general formula (3), R³ to R⁶, n, m, Y', Z, and Z' are as defined in the foregoing, and preferred ones thereof are also the same as those in the foregoing.

In addition, β represents a divalent group derived from the diisocyanate compound or a divalent group derived from the dicarboxylic acid, and examples thereof include divalent groups represented by the following general formulae (3-1) to (3-5).

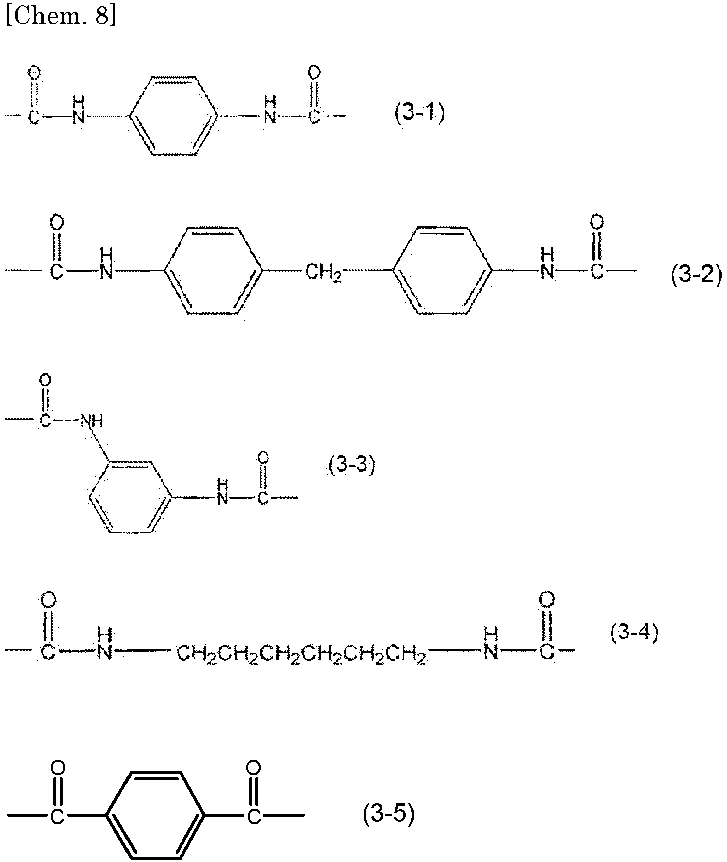

As described in the foregoing, the polycarbonate-based resin (A-2) except the component (A-1) may be contained in the component (A) to the extent that the effects of the present invention are not impaired. The component (A-2) may be an aromatic polycarbonate resin obtained by using an aromatic dihydric phenol-based compound, may be an aliphatic polycarbonate resin obtained by using an aliphatic dihydric phenol-based compound, may be an aliphatic polycarbonate resin obtained by using an aliphatic divalent hydroxyl group-containing compound, or may be an aromatic-aliphatic polycarbonate resin obtained by using the aromatic dihydric phenol-based compound and the aliphatic dihydric phenol-based compound in combination. The component (A-2) can be used for adjusting the content of the repeating unit represented by the general formula (II) in the component (A-1).

Among them, an aromatic polycarbonate resin is preferred as the component (A-2).

The viscosity-average molecular weight of the polycarbonate-based resin as the component (A-2) is preferably from 10,000 to 40,000, more preferably from 13,000 to 30,000 in terms of physical properties.

The aromatic polycarbonate resin is preferably as follows: the resin is free of the repeating unit represented by the general formula (II) and its main chain is formed of a repeating unit represented by the following general formula (III). Such aromatic polycarbonate resin is not particularly limited, and any one of the various known aromatic polycarbonate resins can be used. 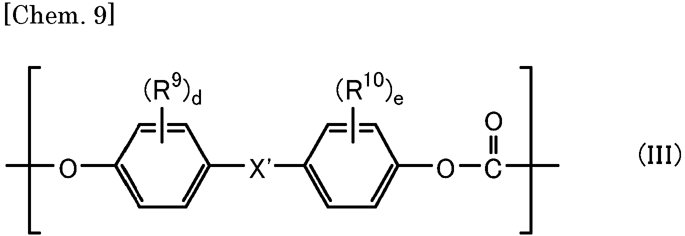 In the formula, R⁹ and R¹⁰ each independently represent a halogen atom, an alkyl group having 1 to 6 carbon atoms, or an alkoxy group having 1 to 6 carbon atoms, X' represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, -S-, -SO-, -SO₂-, -O-, or -CO-, and d and e each independently represent an integer of from 0 to 4.

Specific examples of R⁹ and R¹⁰ include the same examples as those of R¹ and R², and preferred ones thereof are also the same as those of R¹ and R². R⁹ and R¹⁰ each more preferably represent an alkyl group having 1 to 6 carbon atoms or an alkoxy group having 1 to 6 carbon atoms. Specific examples of X' include the same examples as those of X, and preferred ones thereof are also the same as those of X. d and e each independently represent preferably from 0 to 2, more preferably 0 or 1.

Specifically, a resin obtained by a conventional production method for an aromatic polycarbonate can be used as the aromatic polycarbonate resin. Examples of the conventional method include: an interfacial polymerization method involving causing the aromatic dihydric phenol-based compound and phosgene to react with each other in the presence of an organic solvent inert to the reaction and an aqueous alkaline solution, adding a polymerization catalyst, such as a tertiary amine or a quaternary ammonium salt, to the resultant, and polymerizing the mixture; and a pyridine method involving dissolving the aromatic dihydric phenol-based compound in pyridine or a mixed solution of pyridine and an inert solvent, and introducing phosgene to the solution to directly produce the resin.

A molecular weight modifier (terminal stopper), a branching agent, or the like is used as required at the time of the reaction.

It should be noted that the aromatic dihydric phenol-based compound is, for example, a compound represented by the following general formula (III'). 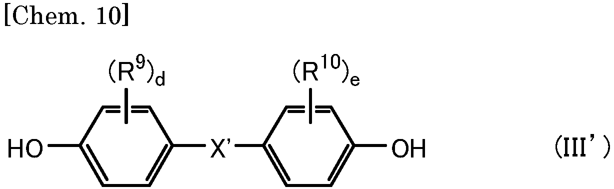 In the formula, R⁹, R¹⁰, X', d, and e are as defined in the foregoing, and preferred ones thereof are also the same as those in the foregoing.

Specific examples of the aromatic dihydric phenol-based compound include bis(hydroxyphenyl)alkane-based dihydric phenols, such as 2,2-bis(4-hydroxyphenyl)propane [bisphenol A], bis(4-hydroxyphenyl)methane, 1,1-bis(4-hydroxyphenyl)ethane, and 2,2-bis(4-hydroxy-3,5-dimethylphenyl) propane, 4,4'-dihydroxydiphenyl, a bis(4-hydroxyphenyl)cycloalkane, bis(4-hydroxyphenyl)oxide, bis(4-hydroxyphenyl) sulfide, bis(4-hydroxyphenyl) sulfone, bis(4-hydroxyphenyl) sulfoxide, and bis(4-hydroxyphenyl) ketone.

Among them, bis(hydroxyphenyl)alkane-based dihydric phenols are preferred, and bisphenol A is more preferred.

One kind of the aromatic polycarbonate resins may be used alone, or two or more kinds thereof may be used in combination.

In addition, the aliphatic polycarbonate resin can be produced by using the aliphatic divalent hydroxyl group-containing compound or the aliphatic dihydric phenol-based compound instead of the aromatic dihydric phenol-based compound.

It should be noted that the aromatic-aliphatic polycarbonate resin can be produced by using the aromatic dihydric phenol-based compound and the aliphatic dihydric phenol-based compound in combination as described in the foregoing.

When the polycarbonate-based resin (A-2) except the component (A-1) is incorporated into the polycarbonate resin composition, its content, which is not particularly limited, is preferably 70 mass% or less, more preferably 50 mass% or less, still more preferably 30 mass% or less, particularly preferably 10 mass% or less in the component (A).

The viscosity-average molecular weight (Mv) of the polycarbonate resin serving as the component (A) is preferably from 18,000 to 30,000, more preferably from 18,500 to 26,000, still more preferably from 19,000 to 25,000, particularly preferably from 19,500 to 24,000.

When the viscosity-average molecular weight of the component (A) falls within the range, the impact resistance of a molded body becomes sufficient, productivity at the time of the production of the polycarbonate resin becomes stable, and molding into a thin body becomes easy.

### [(B) Antioxidant]

The polycarbonate resin composition of the present invention needs to contain an antioxidant as the component (B). Examples of the antioxidant serving as the component (B) include a phosphorus-based antioxidant, a sulfur-based antioxidant, and a phenol-based antioxidant.

The phosphorus-based antioxidant is not particularly limited. Typical examples thereof include: tris(nonylphenyl) phosphite and 2-ethylhexyl diphenyl phosphite; trialkyl phosphites, such as trimethyl phosphite, triethyl phosphite, tributyl phosphite, trioctyl phosphite, trinonyl phosphite, tridecyl phosphite, trioctadecyl phosphite, distearyl pentaerythrityl diphosphite, tris(2-chloroethyl) phosphite, and tris(2,3-dichloropropyl) phosphite; tricycloalkyl phosphites, such as tricyclohexyl phosphite; triaryl phosphites, such as triphenyl phosphite, tricresyl phosphite, tris(ethylphenyl) phosphite, tris(butylphenyl) phosphite, tris(hydroxyphenyl) phosphite, and tris(2,4-di- *tert-*butylphenyl) phosphite; trialkyl phosphates, such as trimethyl phosphate, triethyl phosphate, tributyl phosphate, trioctyl phosphate, tridecyl phosphate, trioctadecyl phosphate, distearyl pentaerythrityl diphosphate, tris(2-chloroethyl) phosphate, and tris(2,3-dichloropropyl)phosphate; tricycloalkyl phosphates, such as tricyclohexyl-1-phosphate; and triaryl phosphates, such as triphenyl phosphate, tricresyl phosphate, tris(nonylphenyl) phosphate, and 2-ethylphenyl diphenyl phosphate. Among them, triaryl phosphite and triaryl phosphate are suitably used.

The sulfur-based antioxidant is not particularly limited. Typical examples thereof include dilauryl-3,3'-thiodipropionate, ditridecyl-3,3'-thiodipropionate, dimyristyl-3,3'-thiodipropionate, distearyl-3,3'-thiodipropionate, laurylstearyl-3,3'-thiodipropionate, pentaerythritol tetrakis(3-laurylthiopropionate), pentaerythritol tetrakis(3-mercaptopropionate), glycerol-3-stearylthiopropionate, bis[2-methyl-4-(3-laurylthiopropionyloxy)-5-*tert*-butylphenyl]sulfide, octadecyl disulfide, mercaptobenzimidazole, 2-mercapto-6-methylbenzimidazole, 1,1'-thiobis(2-naphthol), and tetrakis[methylene-3-(dodecylthio)propionate]methane. Among them, pentaerythritol tetrakis(3-laurylthiopropionate) or tetrakis[methylene-3-(dodecylthio)propionate]methane is preferred.

### <Phenol-based Antioxidant>

The phenol-based antioxidant is not particularly limited, and a hindered phenol-based antioxidant is suitably used. Typical examples thereof include triethylene glycol-bis[3-(3-*tert*-butyl-5-methyl-4-hydroxyphenyl)propionate], 1,6-hexanediol-bis[3-(3,5-di-*tert*-butyl-4-hydroxyphenyl)propionate], pentaerythritol-tetrakis[3-(3,5-di-*tert*-butyl-4-hydroxyphenyl)propionate], octadecyl-3-(3,5-di-*tert*-butyl-4-hydroxyphenyl)propionate, 1,3,5-trimethyl-2,4,6-tris(3,5-di- *tert*-butyl-4-hydroxybenzyl)benzene, *N*,*N*-hexamethylene bis[(3,5-di-*tert*-butyl-4-hydroxy)-hydrocinnamide], ,5-di- *tert*-butyl-4-hydroxybenzyl phosphonate-diethyl ester, tris(3,5-di-*tert*-butyl-4-hydroxybenzyl) isocyanurate, tetrakis(2,4-di-*tert*-butylphenyl) 4,4'-biphenylene diphosphinate, 3,9-bis{1,1-dimethyl-2-[B-(3-*tert*-butyl-4-hydroxy-5-methylphenyl)propionyloxy] ethyl}-2,4,8,10-tetraoxaspiro(5,5)undecane, 2,2-thio-diethylene bis[3-(3,5-di-*tert*-butyl-4-hydroxyphenyl)propionate], 2,4-bis(*n*-octylthio)-6-(4-hydroxy-3,5-di-*tert*-butylanilino)-1,3,5-triazine, and calcium bis(ethyl 3,5-di-*tert-*butyl-4-hydroxybenzyl phosphonate).

Among those compounds, aromatic monohydroxy compounds substituted with one or more alkyl groups each having 5 or more carbon atoms are preferred. Specifically, octadecyl-3-(3,5-di- *tert*-butyl-4-hydroxyphenyl)propionate, pentaerythritol-tetrakis[3-(3,5-di- *tert*-butyl-4-hydroxyphenyl)propionate], 1,6-hexanediol-bis[3-(3,5-di- *tert*-butyl-4-hydroxyphenyl)propionate], 1,3,5-trimethyl-2,4,6-tris(3,5-di-*tert*-butyl-4-hydroxybenzyl)benzene, and the like are preferred, and pentaerythritol-tetrakis[3-(3,5-di- *tert*-butyl-4-hydroxyphenyl)propionate] is more preferred.

In the present invention, one kind of the antioxidants (B) may be used alone, or two or more kinds thereof may be used in combination. It is preferred that the phosphorus-based antioxidant be used as the antioxidant (B), and it is more preferred that the phosphorus-based antioxidant be used alone, or the phosphorus-based antioxidant and the sulfur-based antioxidant and/or the phenol-based antioxidant be used in combination.

The content of the antioxidant (B) in the polycarbonate resin composition of the present invention needs to be from 0.001 part by mass to 2 parts by mass with respect to 100 parts by mass of the polycarbonate resin (A), and is preferably from 0.005 part by mass to 1 part by mass, more preferably from 0.01 part by mass to 0.5 part by mass. When the content of the component (B) is less than 0.001 part by mass, a change in color, or reduction in molecular weight occurs at the time of its molding, and when the content of the component (B) is more than 2 parts by mass, an antioxidant effect cannot be improved.

### [Other Component]

Any other component can be appropriately incorporated into the polycarbonate resin composition of the present invention to the extent that the effects of the present invention are not remarkably impaired.

Examples of the other component include additives, such as an inorganic filler, a UV absorber, a mold release agent, and a colorant (a dye or a pigment).

Examples of the inorganic filler include talc, mica, kaolin, diatomaceous earth, calcium carbonate, calcium sulfate, barium sulfate, a glass fiber, a carbon fiber, and a potassium titanate fiber. Among them, talc, mica, or the like, which has a plate shape, or a fibrous filler, such as a glass fiber or a carbon fiber is preferred.

It should be noted that an inorganic filler that blocks off light cannot be used for obtaining the transparency of the molded body, but the transparency can be obtained by using an inorganic filler that transmits light, such as a glass fiber. When the transparency is obtained by using the glass fiber, such a glass fiber that a difference in refractive index between the polycarbonate resin (A) and the glass fiber is 0.002 or less is preferably used. In addition, the use of a glass fiber whose section has a flat shape as the glass fiber can improve the dimensional stability of a molded article to be obtained.

Examples of the UV absorber include a benzoxazinone-based UV absorber, a benzotriazole-based UV absorber, a salicylate-based UV absorber, a malonic ester-based UV absorber, an oxalanilide-based UV absorber, a triazine-based UV absorber, a benzophenone-based UV absorber, and a cyanoacrylate-based UV absorber. Among them, a benzotriazole-based UV absorber and a benzophenone-based UV absorber are preferred.

As the mold release agent, a fatty acid ester, a polyolefin-based wax, a fluorine oil, a paraffin wax, or the like can be used. Among them, a fatty acid ester is preferred, and a partial ester, such as stearic monoglyceride, stearic diglyceride, stearic monosorbitate, behenic moonoglyceride, pentaerythritol monostearate, pentaerythritol distearate, propylene glycol monostearate, or sorbitan monostearate is preferred.

Examples of the colorant include dyes, such as a perylene-based dye, a coumarin-based dye, a thioindigo-based dye, an anthraquinone-based dye, a thioxanthone-based dye, a ferrocyanide, a perinone-based dye, a quinoline-based dye, and a phthalocyanine-based dye.

When the other components are incorporated into the polycarbonate resin composition, their contents are each 10 parts by mass or less, preferably 5 parts by mass or less, more preferably 1 part by mass or less, particularly preferably 0.5 part by mass or less with respect to 100 parts by mass of the component (A).

### [Kneading and Molding]

The polycarbonate resin composition of the present invention is obtained by kneading predetermined amounts of the component (A) and the component (B), and as required, any other component. A method for the kneading is not particularly limited and examples thereof include methods involving using a ribbon blender, a Henschel mixer, a Banbury mixer, a drum tumbler, a single-screw extruder, a twin-screw extruder, a co-kneader, and a multi-screw extruder. In addition, a heating temperature during the kneading is preferably from 240°C to 330°C, more preferably from 250°C to 320°C.

Various conventionally known molding methods, such as an injection molding method, an injection compression molding method, an extrusion molding method, a blow molding method, a press molding method, a vacuum molding method, and an expansion molding method, can be employed for the molding.

It should be noted that a component to be incorporated except the polycarbonate resin can be melted and kneaded with the polycarbonate resin or any other thermoplastic resin in advance, i.e., can be added as a master batch.

In addition, the polycarbonate resin composition is preferably pelletized and then subjected to injection molding. A general injection molding method or a general injection compression molding method, or a special molding method, such as a gas-assisted molding method, can be employed for the injection molding. Thus, various molded bodies can be produced.

When the molded body of the present invention is used as an external appearance member, a molding technology for improving an external appearance, such as a heat cycle molding method, a high-temperature mold, or an insulated runner mold, is preferably employed.

Insert molding or outsert molding becomes an effective method when a molding machine has a high-temperature heat source because the insert molding or outsert molding of a metal part can improve the efficiency of heat transfer from the heat source.

In order to obtain a large and thin injection-molded body, injection compression molding, or high-pressure or ultrahigh-pressure injection molding is preferably employed, and partial compression molding or the like can be employed in the molding of a molded body having a partial thin portion.

The polycarbonate resin composition of the present invention thus obtained has sunscreen resistance. The phrase "having sunscreen resistance" as used herein means that the polycarbonate resin composition has chemical resistance against a sunscreen, i.e., a reduction in physical property of the polycarbonate resin composition occurring upon its contact with the sunscreen is suppressed to a low level. The phrase specifically means the following: when three test samples each measuring 125 by 13 by 3.2 mm are produced with molding at a molding temperature of 280°C and a die temperature of 80°C, a strain of 2.0% is applied to the sample by a three-point bending test method at a span distance of 80 mm, and then the sample is covered with a cloth impregnated with a solvent containing at least one kind selected from a UV absorber, a UV-scattering agent, an emulsifying agent, an oil solution, an additive, and an alcohol, and is left to stand for 10 days, a change in its external appearance, such as a fine crack, is not observed.

The polycarbonate resin composition of the present invention is excellent in chemical resistance against components in the sunscreen, such as a UV absorber, a UV-scattering agent, a solvent, such as an alcohol, an emulsifying agent, an oil solution, and an additive.

Examples of the UV absorber include a para-aminobenzoic acid derivative, a salicylic acid derivative, a cinnamic acid derivative, a β,β-diphenyl acrylate derivative, a benzophenone derivative, a benzylidene-camphor derivative, a phenylbenzimidazole derivative, a triazine derivative, a phenylbenzotriazole derivative, an anthranil derivative, an imidazoline derivative, a benzalmalonate derivative, a dibenzoylmethane derivative, and a 4,4-diarylbutadiene derivative.

Examples of the *para*-aminobenzoic acid derivative include *para*-aminobenzoic acid (hereinafter abbreviated as "PABA"), ethyl PABA, ethyl-dihydroxypropyl PABA, ethylhexyl-dimethyl PABA, glyceryl PABA, and PEG-25-PABA.

Examples of the salicylic acid derivative include homosalate (homomenthyl salicylate), ethylhexyl salicylate, ethylhexyl salicylate, dipropylene glycol salicylate, and TEA salicylate.

Examples of the cinnamic acid derivative include ethylhexyl methoxycinnamate, octyl methoxycinnamate, isopropyl methoxycinnamate, isoamyl methoxycinnamate, cinoxate, DEA methoxycinnamate, diisopropyl methylcinnamate, and glyceryl-ethylhexanoate-dimethoxycinnamate.

Examples of the β,β-diphenyl acrylate derivative include octocrylene and etocrylene.

Examples of the benzophenone derivative include benzophenone-1, benzophenone-2, benzophenone-3, benzophenone-4, benzophenone-5, benzophenone-6, benzophenone-8, benzophenone-9, and benzophenone-12.

Examples of the benzylidene-camphor derivative include 3-benzylidene-camphor, 4-methylbenzylidene-camphor, benzylidene-camphor sulfonic acid, camphor benzalkonium methosulfate, terephthalylidene dicamphorsulfonic acid, and polyacrylamide methylbenzylidene-camphor.

Examples of the phenylbenzimidazole derivative include phenylbenzimidazole sulfonic acid, Na phenylbenzimidazole sulfonate, and disodium phenyl dibenzimidazole tetrasurfonate.

Examples of the triazine derivative include anisotriazine, ethylhexyltriazone, octyltriazone, diethylhexyl butamido triazone, 2,4,6-tris(diisobutyl-4'-aminobenzalmalonate)-*s*-triazine, and 2,4,6-tris[4-(2-ethylhexyloxycarbonyl)anilino] -1,3, 5-triazine.

Examples of the phenylbenzotriazole derivative include drometrizole trisiloxane and methylenebis(benzotriazolyl-tetramethylbutylphenol).

Examples of the anthranil derivative include menthyl anthranilate.

Examples of the imidazoline derivative include ethylhexyl dimethoxy benzylidene dioxoimidazoline propionate.

Example of the benzalmalonate derivative include a polyorganosiloxane having a benzalmalonate functional group.

Examples of the dibenzoylmethane derivative include t-butylmethoxydibenzoylmethane and 4-isopropyldibenzoylmethane.

Examples of the 4,4-diarylbutadiene derivative include 1,1-dicarboxy (2,2'-dimethylpropyl)-4,4-diphenylbutadiene.

Examples of the UV-scattering agent include titanium oxide and zinc oxide.

Examples of the solvent include alcohols, such as ethanol or denatured alcohol, and water.

Examples of the emulsifying agent include sodium cetearyl sulfate, a hydrogenated coco-glyceride, and Na hydroxide.

Examples of the oil solution include a silicone oil, an ester oil, an ether oil, a fluorine oil, a hydrocarbon oil, and higher alcohols.

Examples of the silicone oil include a linear polyorganosiloxane and a cyclic polysiloxane. Examples of the linear polyorganosiloxane include a linear alkyl polysiloxane having an alkyl group having 1 to 5 carbon atoms, and a linear alkylaryl polysiloxane having an alkyl group having 1 to 5 carbon atoms and an aryl group having 6 to 10 carbon atoms, and specific examples thereof include a linear dimethylpolysiloxane and a linear methylphenylpolysiloxane.

Examples of the ester oil include: vegetable oils, such as a safflower oil, a soybean oil, a grape seed oil, a sesame oil, a wheat germ oil, an avocado oil, an olive oil, a castor oil, a macadamia nut oil, and a meadowfoam oil; animal oils, such as a mink oil, a turtle oil, and a liquid lanolin; fatty acid esters of lower alcohols, such as isopropyl myristate, isopropyl isostearate, and lanolin fatty acid isopropyl; fatty acid esters of higher alcohols, such as 2-ethylhexyl isononanoate, isotridecyl isononanoate, octyldodecyl myristate, octyldodecyl oleate, cetyl 2-ethylhexanoate, isocetyl 2-ethylhexanoate, and isostearyl isostearate; hydroxy acid esters of higher alcohols, such as diisostearyl malate, or cetyl lactate; and fatty acid esters of polyhydric alcohols, such as glyceryl tricaprylate, glyceryl tri-2-ethylhexanoate, glyceryl triisostearate, glycerin, ethylhexyl glycerin, glycerin tri(caprylate/caprate), propylene glycol dicaprylate, propylene glycol di(caprylate/caprate), propyleneglycol diisostearate, or neopentylglycol dicaprylate.

Examples of the ether oil include cetyl dimethylbutyl ether. Examples of the fluorine oil include perfluoropolyether and perfluorocarbon.

Examples of the hydrocarbon oil include liquid paraffin, squalane, light liquid isoparaffin, heavy liquid isoparaffin, and polybutene.

Examples of the higher alcohol include cetearyl alcohol and cetyl alcohol.

Examples of the additives include a surfactant, a thickener, a preservative, an antioxidant, a chelating agent, a moisturizing agent, a plant extract, and a vitamin E derivative.

Examples of the surfactant include a nonionic surfactant and a silicone surfactant.

Examples of the nonionic surfactant include polyoxyethylene hydrogenated castor oil, polyoxyethylene alkyl ethers, polyoxyethylene alkyl phenyl ethers, polyoxyethylene fatty acid esters, polyoxyethylene sorbitan fatty acid esters, polyoxyethylene fatty acid monoalkanolamides, polyoxyethylene fatty acid dialkanolamides, PEG-40 castor oil, and Ceteth-10.

Examples of the silicone surfactant include polyoxyethylene-methylpolysiloxane copolymers and dimethicone.

Examples of the thickener include guar gum, quince seed, carrageenan, xanthan gum, locust bean gum, gum arabic, tragacanth, pectin, mannan, starch, pullulan, dextran, curdlan, collagen, keratin, casein, albumin, gelatin, chitin, methyl cellulose, ethyl cellulose, hydroxyethyl cellulose, hydroxypropyl cellulose, hydroxypropylmethyl cellulose, solubilized starch, polyvinyl alcohol, polyvinyl pyrrolidone, polyethylene glycol, polyvinyl pyrrolidone, polyacrylic amide, mucopolysaccharide, distarch phosphate, polyquaternium-51, (acrylate/alkyl (C10 to 30) acrylate) copolymer, and carbomer.

Examples of the preservative include phenoxyethanol, methylparaben, ethylparaben, and propylparaben.

Examples of the antioxidant include dibutylhydroxytoluene, butylhydroxyanisole, sorbic acid, sodium sulfite, and L-cysteine hydrochloride.

Examples of the chelating agent include ethylenediaminetetraacetic acid (edetic acid), trisodium ethylenediaminetetraacetate (trisodium EDTA), phytic acid, gluconic acid, polyphosphoric acid, and metaphosphoric acid.

Examples of the moisturizing agent include propylene glycol cyclomethicone, 1,3-butylene glycol, Na hyaluronate, and quince seed extract.

Examples of the plant extract include *Phellodendron amurense* bark extract. Examples of the vitamin E derivative include tocopherol acetate.

In addition, the sunscreen may contain, in addition to the foregoing, components to be generally used for cosmetics, such as a semi-solid oil, a polymer latex, a medicine, a ceramide, a circulation promoter, a cooling sensation agent, an antiperspirant, a microbicide, a skin activating agent, a pH adjuster, or a perfume.

Examples of the form of the sunscreen in the present invention include a sunscreen cream, a sunscreen lotion, a sunscreen emulsion, a sunscreen mousse, a sun oil, and a sun care spray.

In addition, the polycarbonate resin composition of the present invention has an IZOD impact strength at 23°C measured in accordance with a method described in Examples of preferably 700 J/m² or more, more preferably 720 J/m² or more, still more preferably 730 J/m² or more.

The polycarbonate resin composition of the present invention has an IZOD impact strength at -30°C measured in accordance with the method described in Examples of preferably 400 J/m² or more, more preferably 430 J/m² or more, still more preferably 450 J/m² or more.

A molded body can be produced by molding a pellet of the polycarbonate resin composition obtained as described above through the utilization of, for example, an injection molding method, an injection compression molding method, an extrusion molding method, a blow molding method, a press molding method, a vacuum molding method, or an expansion molding method.

The molded body of the present invention is preferably an injection-molded body (including injection compression).

The molded body of the present invention suitably finds use in members for portable information terminals, such as a cellular phone, a smart phone, and a tablet terminal, specifically a casing, a protective case, and a protective cover because the molded body is excellent in sunscreen resistance and impact resistance.

Examples of the portable information terminals can include a cellular phone, a smart phone, and a tablet-type computer. In addition, each of those portable information terminals may be a portable information terminal used in a normal state, or may be an information terminal mounted so as to come into contact with a skin having applied thereto a sunscreen (such as an arm-mounted information terminal or a face-mounted information terminal).

### Examples

The present invention is described in more detail by way of Examples. However, the present invention is by no means limited by these Examples.

Performance tests for resin compositions obtained in Examples were performed as described below.

### (1) Chemical Resistance (Sunscreen Resistance)

A test sample measuring 125 by 13 by 3.2 mm was obtained by injection molding at a molding temperature of 280°C and a die temperature of 80°C, a strain of 2.0% was applied to the test sample by a three-point bending test method at a span distance of 80 mm, and then the test sample was covered with a cloth impregnated with a sunscreen and left to stand at 23°C for 240 hours. After that, a change in its external appearance was observed. The test was performed at a sample number (n) of 3, and an evaluation was performed in accordance with the following criteria.

The case where none of the three samples showed a change in external appearance was evaluated as "∘".

The case where even one of the samples showed a change in external appearance, such as a fine crack, was evaluated as "×".

It should be noted that the following two kinds of sunscreens were used.
Sunscreen 1: NIVEA SUN MOISTURISING IMMEDIATE SUN PROTECTION SPF30, manufacturing by Beiersdorf AG (components: water, ethylhexyl methoxycinnamate, homosalate (homomenthyl salicylate), ethylhexyl salicylate, denatured alcohol, benzophenone-3, distarch phosphate, t-butylmethoxydibenzoylmethane, dimethicone, Na phenylbenzimidazole sulfonate, cetearyl alcohol, glycerin, tocopherol acetate, cetyl alcohol, hydrogenated coco-glyceride, ethylhexylglycerin, xanthan gum, PEG-40 castor oil, trisodium ethylenediamine tetraacetate (trisodium EDTA), sodium cetearyl sulfate, phenoxyethanol, methylparaben, ethylparaben, propylparaben, dibutylhydroxytoluene, and a perfume)
Sunscreen 2: NIVEA SUN PROTECT WATER GEL SPF30 manufacturing by Nivea-Kao Co., Ltd. (components: water, ethanol, octyl methoxycinnamate, PG: propyleneglycol cyclomethicone, glyceryl tri(caprylate/caprate), octyl triazone, Na hyaluronate, polyquaternium-51, BG: 1,3-butyleneglycol, quince seed extract, *Phellodendron amurense* bark extract, tocopherol acetate, (acrylate/alkyl (C10 to 30) acrylate) copolymer, carbomer, Ceteth-10, methylparaben, and Na hydroxide)

### (2) Notched IZOD impact strength (IZOD): Impact Resistance

The notched IZOD impact strengths of a test sample having a thickness of 3.2 mm were measured at measurement temperatures of 23°C and -30°C in conformity with ASTM standard D-256, and were used as indicators of impact resistance.

### (3) Total Light Transmittance: Transparency

The total light transmittance of a test sample measuring 25 by 35 by 3.2 mm was measured with a haze meter (NDH2000 manufactured by Nippon Denshoku Industries Co., Ltd.) in conformity with JIS K 7105.

### [Production Example 1] Production of Polycarbonate-polydimethylsiloxane Copolymer 1 (PC-PDMS 1; Component (A-1)

### (1. Oligomer Synthesizing Step)

Sodium dithionite was added in an amount of 2,000 ppm by mass with respect to bisphenol A (BPA) to be dissolved later to 5.6 mass% aqueous sodium hydroxide, and then BPA was dissolved in the mixture so that the concentration of BPA was 13.5 mass%. Thus, a solution of BPA in aqueous sodium hydroxide was prepared.

The solution of BPA in aqueous sodium hydroxide, methylene chloride, and phosgene were continuously passed through a tubular reactor having an inner diameter of 6 mm and a tube length of 30 m at flow rates of 40 L/hr, 15 L/hr, and 4.0 kg/hr, respectively. The tubular reactor had a jacket portion and the temperature of the reaction liquid was kept at 40°C or less by passing cooling water through the jacket.

The reaction liquid that had exited the tubular reactor was continuously introduced into a baffled vessel type reactor provided with a sweptback blade and having an internal volume of 40 L. The solution of BPA in aqueous sodium hydroxide, 25 mass% aqueous sodium hydroxide, water, and a 1 mass% aqueous solution of triethylamine were further added to the reactor at flow rates of 2.8 L/hr, 0.07 L/hr, 17 L/hr, and 0.64 L/hr, respectively, to perform a reaction. An aqueous phase was separated and removed by continuously taking out the reaction liquid overflowing the vessel type reactor and leaving the reaction liquid at rest. Then, a methylene chloride phase was collected.

The polycarbonate oligomer thus obtained had a concentration of 329 g/L and a chloroformate group concentration of 0.74 mol/L.

### (2. PC-PDMS 1 Producing Step)

Next, 15 L of the polycarbonate oligomer solution produced in the foregoing, 9.0 L of methylene chloride, 96 g of an allylphenol-terminal-modified polydimethylsiloxane (PDMS) having a number of repetitions (n) of a dimethylsiloxane unit of 90, and 8.8 mL of triethylamine were loaded into a 50-L vessel type reactor provided with a baffle board, a paddle type stirring blade, and a cooling jacket. 1,389 g of 6.4 mass% aqueous sodium hydroxide was added to the mixture under stirring to perform a reaction between the polycarbonate oligomer and the allylphenol-terminal-modified PDMS for 10 minutes.

A solution of p- t-butylphenol (PTBP) in methylene chloride (prepared by dissolving 114 g of PTBP in 2.0 L of methylene chloride) and a solution of BPA in aqueous sodium hydroxide (prepared by dissolving 1,012 g of BPA in an aqueous solution prepared by dissolving 577 g of NaOH and 2.0 g of sodium dithionite in 8.4 L of water) were added to the polymerization liquid to perform a polymerization reaction for 50 minutes.

10 L of methylene chloride was added to the resultant for dilution and then the mixture was stirred for 10 minutes. After that, the mixture was separated into an organic phase containing a PC-PDMS, and an aqueous phase containing excess amounts of BPA and NaOH, and then the organic phase was isolated.

The solution of the PC-PDMS in methylene chloride thus obtained was sequentially washed with 0.03 mol/L aqueous NaOH and 0.2 mol/L hydrochloric acid in amounts of 15 vol% each with respect to the solution. Next, the solution was repeatedly washed with pure water until an electric conductivity in an aqueous phase after the washing became 0.01 µS/m or less.

The solution of the PC-PDMS in methylene chloride obtained by the washing was concentrated and pulverized, and then the resultant flake was dried under reduced pressure at 120°C. Thus, a PC-PDMS 1 was obtained.

The resultant PC-PDMS 1 had a dimethylsiloxane residue amount determined by NMR measurement of 1.5 mass%, a viscosity number measured in conformity with ISO 1628-4 (1999) of 53.8, and a viscosity-average molecular weight (Mv) of 20,500.

### [Production Example 2] Production of Polycarbonate-polydimethylsiloxane Copolymer 2 (PC-PDMS 2; Component (A-1))

Production was performed in the same manner as in Production Example 1 except that the usage amount of *p*-*t*-butylphenol (PTBP) in the solution of PTBP in methylene chloride was changed from 114 g to 107 g. The resultant PC-PDMS 2 had a dimethylsiloxane residue amount determined by NMR measurement of 1.5 mass%, a viscosity number measured in conformity with ISO 1628-4 (1999) of 56.0, and a viscosity-average molecular weight (Mv) of 21,500.

### [Production Example 3] Production of Polycarbonate-polydimethylsiloxane Copolymer 3 (PC-PDMS 3; Component (A-1))

Production was performed in the same manner as in Production Example 1 except that the usage amount of the allylphenol terminal-modified polydimethylsiloxane (PDMS) having an average number of repetitions (n) of a dimethylsiloxane unit of 90 was changed from 96 g to 154 g.

The resultant PC-PDMS 3 had a dimethylsiloxane residue amount determined by NMR measurement of 2.4 mass%, a viscosity number measured in conformity with ISO 1628-4 (1999) of 53.8, and a viscosity-average molecular weight (Mv) of 20,500.

### [Production Example 4] Production of Polycarbonate-polydimethylsiloxane Copolymer 4 (PC-PDMS 4; Component (A-1))

Production was performed in the same manner as in Production Example 2 except that the usage amount of *p*-*t*-butylphenol (PTBP) in the solution of PTBP in methylene chloride was changed from 114 g to 107 g.

The resultant PC-PDMS 4 had a dimethylsiloxane residue amount determined by NMR measurement of 2.4 mass%, a viscosity number measured in conformity with ISO 1628-4 (1999) of 56.1, and a viscosity-average molecular weight (Mv) of 21,500.

### [Production Example 5] Production of Polycarbonate-polydimethylsiloxane Copolymer 5 (PC-PDMS 5)

Production was performed in the same manner as in Production Example 4 except that the usage amount of the allylphenol terminal-modified polydimethylsiloxane (PDMS) having an average number of repetitions (n) of a dimethylsiloxane unit of 90 was changed from 154 g to 231 g.

The resultant PC-PDMS 5 had a dimethylsiloxane residue amount determined by NMR measurement of 3.6 mass%, a viscosity number measured in conformity with ISO 1628-4 (1999) of 56.0, and a viscosity-average molecular weight (Mv) of 21,500.

### [Production Example 6] Production of Polycarbonate-polydimethylsiloxane Copolymer 6 (PC-PDMS 6; Component (A-1))

Production was performed in the same manner as in Production Example 4 except that the average number of repetitions (n) of the dimethylsiloxane unit was changed from 90 to 150.

The resultant PC-PDMS 6 had a dimethylsiloxane residue amount determined by NMR measurement of 2.4 mass%, a viscosity number measured in conformity with ISO 1628-4 (1999) of 56.0, and a viscosity-average molecular weight (Mv) of 21,500.

### [Production Example 7] Production of Polycarbonate-polydimethylsiloxane Copolymer 7 (PC-PDMS 7; Component (A-1))

Production was performed in the same manner as in Production Example 4 except that the average number of repetitions (n) of the dimethylsiloxane unit was changed from 90 to 70.

The resultant PC-PDMS 7 had a dimethylsiloxane residue amount determined by NMR measurement of 2.4 mass%, a viscosity number measured in conformity with ISO 1628-4 (1999) of 56.1, and a viscosity-average molecular weight (Mv) of 21,500.

### [Production Example 8] Production of Polycarbonate-polydimethylsiloxane Copolymer 8 (PC-PDMS 8; Component (A-1))

Production was performed in the same manner as in Production Example 4 except that the average number of repetitions (n) of the dimethylsiloxane unit was changed from 90 to 20.

The resultant PC-PDMS 8 had a dimethylsiloxane residue amount determined by NMR measurement of 2.4 mass%, a viscosity number measured in conformity with ISO 1628-4 (1999) of 56.1, and a viscosity-average molecular weight (Mv) of 21,500.

The physical properties of the PC-PDMS 1 to PC-PDMS 8 obtained in Production Examples 1 to 8 are summarized in Table 1 below.

### [Table 1]

**Table 1**

| | Production Example 1 | Production Example 2 | Production Example 3 | Production Example 4 | Production Example 5 | Production Example 6 | Production Example 7 | Production Example 8 |
|---|---|---|---|---|---|---|---|---|
| | PC-PDMS 1 | PC-PDMS 2 | PC-PDMS 3 | PC-PDMS 4 | PC-PDMS 5 | PC-PDMS 6 | PC-PDMS 7 | PC-PDMS 8 |
| Average number of repetitions (n) in formula (II) | 90 | 90 | 90 | 90 | 90 | 150 | 70 | 20 |
| Allylphenol terminal-modified PDMS residue amount (wt%) | 1.5 | 1.5 | 2.4 | 2.4 | 3.6 | 2.4 | 2.4 | 2.4 |
| Viscosity number (mL/g) | 53.8 | 56 | 53.8 | 56.1 | 56 | 56 | 56.1 | 56.1 |
| Viscosity-average molecular weight (Mv) | 20,500 | 21,500 | 20,500 | 21,500 | 21,500 | 21,500 | 21,500 | 21,500 |

### [Examples 1 to 7 and Comparative Examples 1 to 3]

A polycarbonate resin serving as the component (A) was blended at ratios (unit: part(s) by mass) shown in Table 2, and 0.10 part by mass of "IRGAFOS 168" (trade name, tris(2,4-di-*t*-butylphenyl) phosphite, manufactured by BASF Japan Ltd.) was mixed as an antioxidant serving as the component (B) with respect to 100 parts by mass of the component (A). After that, the mixture was melted and kneaded with a vented biaxial extruder "TEM-35B" (model name, manufactured by Toshiba Machine Co., Ltd.) at a resin temperature of 280°C to provide a resin composition pellet.

The resultant pellet was subjected to injection molding with an injection molding machine under the molding conditions of a cylinder temperature of 280°C and a mold temperature of 80°C to provide a test sample.

The resultant test sample was evaluated for its sunscreen resistance, impact resistance, and transparency in accordance with the above-mentioned method. The results are shown in Table 2.

### [Table 2]

**Table 2**

| | | | | Example | | | | | | | Comparative Example | | |
|---|---|---|---|---|---|---|---|---|---|---|---|---|---|
| | | | | 1 | 2 | 3 | 4 | 5 | 6 | 7 | 1 | 2 | 3 |
| Resin composition | (A) | PC-PDMS 1 (n=90, PDMS content: 1.5 mass%) | | 100 | - | - | - | - | - | - | - | - | - |
| | | PC-PDMS 2 (n=90, PDMS content: 1.5 mass%) | | - | 100 | - | - | - | - | - | - | - | - |
| | | PC-PDMS 3 (n=90, PDMS content: 2.4 mass%) | | - | - | 100 | - | - | - | - | - | - | - |
| | | PC-PDMS 4 (n=90, PDMS content: 2.4 mass%) | | - | - | - | 100 | - | - | - | - | - | - |
| | | PC-PDMS 5 (n=90, PDMS content 3.6 mass%) | | - | - | - | - | - | - | 40 | - | 100 | - |
| | | PC-PDMS 6 (n=150, PDMS content: 2.4 mass%) | | - | - | - | - | 100 | - | - | - | - | - |
| | | PC-PDMS 7 (n=70, PDMS content: 2.4 mass%) | | - | - | - | - | - | 100 | - | - | - | - |
| | | PC-PDMS 8 (n=20, PDMS content: 2.4 mass%) | | - | - | - | - | - | - | - | - | - | 100 |
| | | PC (FN2200A) *1 | | - | - | - | - | - | - | 60 | 100 | - | - |
| | (B) | Antioxidant (IRGAFOS 168) | | 0.1 | 0.1 | 0.1 | 0.1 | 0.1 | 0.1 | 0.1 | 0.1 | 0.1 | 0.1 |
| | Content of repeating unit represented by formula (II) in component (A) (mass%) | | | 1.5 | 1.5 | 2.4 | 2.4 | 2.4 | 2.4 | 1.4 | - | 3.6 | 2.4 |
| Performance evaluation | Sunscreen resistance | | Sunscreen 1 | ○ | ○ | ○ | ○ | ○ | ○ | ○ | × | × | × |
| | | | Sunscreen 2 | ○ | ○ | ○ | ○ | ○ | ○ | ○ | × | × | × |
| | Total light transmittance (%) | | | 73 | 73 | 72 | 72 | 55 | 73 | 68 | 89 | 71 | 89 |
| | Notched IZOD impact strength (23°C) J/m | | | 780 | 850 | 820 | 860 | 800 | 830 | 850 | 800 | 820 | 800 |
| | Notched IZOD impact strength (-30°C) J/m | | | 470 | 600 | 760 | 760 | 760 | 740 | 600 | 200 | 770 | 210 |

### (Description of Annotation in Table 2)

*1: "TARFLON FN2200A" (trade name, manufactured by Idemitsu Kosan Co., Ltd., bisphenol A-type aromatic polycarbonate having *p*-*t*-butylphenol as terminal group, viscosity-average molecular weight: 21,500), component (A-2)

It is understood from Table 2 that the polycarbonate resin composition according to one embodiment of the present invention is excellent in all of sunscreen resistance (chemical resistance), impact resistance, and transparency.

On the other hand, it is understood from Comparative Example 1 that the polycarbonate resin composition that does not contain any PC-POS in the component (A) cannot satisfy sunscreen resistance (chemical resistance) and impact resistance at a low temperature. It is understood from Comparative Example 2 that when the content of the repeating unit represented by the general formula (II) in the component (A) is more than 3.0 mass%, the sunscreen resistance (chemical resistance) cannot be satisfied. It is understood from Comparative Example 3 that when the average number of repetitions n of the repeating unit represented by the general formula (II) in the component (A) is less than 30, the sunscreen resistance (chemical resistance) and the impact resistance at low temperature cannot be satisfied.

### Industrial Applicability

The polycarbonate resin composition of the present invention is excellent in sunscreen resistance (chemical resistance), impact resistance, and transparency, and hence can be suitably used in members for portable information terminals in which these characteristics are required.

## Claims

1. A polycarbonate resin composition having sunscreen resistance, comprising a blend of:
100 parts by mass of (A) a polycarbonate resin comprising a polycarbonate-polyorganosiloxane copolymer (A-1) comprising, in a main chain thereof, a repeating unit represented by the general formula (I) and a repeating unit represented by the general formula (II), wherein n=30 to 150, the component (A) having a content of the repeating unit represented by the general formula (II) of from 1.1 mass% to 2.9 mass%, and the component (A) having a viscosity-average molecular weight of from 19,500 to 24,000, calculated from Schnell's equation, [η]= 1.23×10⁻⁵×Mv^{0.83}, by measuring the limiting viscosity [η] of a methylene chloride solution at 20°C in a Ubbelohde-type viscosimeter tube,
0.001 part by mass to 2 parts by mass of (B) an antioxidant,
wherein other components other the component (A) and the component (B) are each 10 parts by mass or less with respect to 100 parts by mass of the component (A): 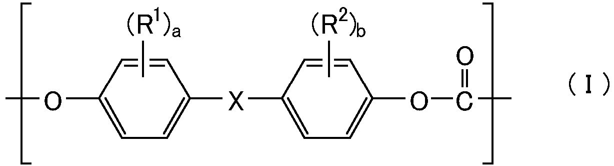 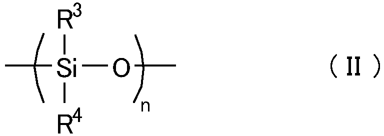 wherein:
R¹ and R² each independently represent a halogen atom, an alkyl group having 1 to 6 carbon atoms, or an alkoxy group having 1 to 6 carbon atoms, X represents a single bond, an alkylene group having 1 to 8 carbon atoms, an alkylidene group having 2 to 8 carbon atoms, a cycloalkylene group having 5 to 15 carbon atoms, a cycloalkylidene group having 5 to 15 carbon atoms, a fluorenediyl group, an arylalkylene group having 7 to 15 carbon atoms, an arylalkylidene group having 7 to 15 carbon atoms, -S-, -SO-, -SO₂-, -O-, or -CO-, and a and b each independently represent an integer of from 0 to 4; and
R³ and R⁴ each independently represent a hydrogen atom, a halogen atom, an alkyl group having 1 to 6 carbon atoms, an alkoxy group having 1 to 6 carbon atoms, or an aryl group having 6 to 12 carbon atoms, and n represents an average number of repetitions.

2. The polycarbonate resin composition according to claim 1, wherein the antioxidant serving as the component (B) comprises a phosphorus-based antioxidant.

3. A molded body, which is produced by molding the polycarbonate resin composition of claim 1 or 2.

4. A casing for portable information terminals, comprising the molded body of claim 3.

5. A protective case for portable information terminals, comprising the molded body of claim 3.

6. A use of the polycarbonate resin composition as defined in claim 1 or 2 for producing a molded body.

7. The use according to claim 6, wherein the molded body is a member for portable information terminals or a protective case.

## Patentansprüche

1. Polycarbonatharzzusammensetzung mit Sonnenschutzbeständigkeit, umfassend eine Mischung von:
100 Masseteilen (A) eines Polycarbonatharzes, umfassend ein Polycarbonat-Polyorganosiloxan-Copolymer (A-1), das in einer Hauptkette davon eine durch die allgemeine Formel (I) dargestellte Wiederholungseinheit und eine durch die allgemeine Formel (II) dargestellte Wiederholungseinheit umfasst, wobei n = 30 bis 150, die Komponente (A) einen Gehalt an der durch die allgemeine Formel (II) dargestellten Wiederholungseinheit von 1,1 Massen-% bis 2,9 Massen-% aufweist und die Komponente (A) ein viskositätsmittleres Molekulargewicht von 19.500 bis 24.000, berechnet nach der Schnell-Gleichung, [η]= 1,23×10⁻⁵×Mv^{0,83}, durch Messen der Grenzviskosität [η] einer Methylenchloridlösung bei 20°C in einem Viskosimeterrohr vom Ubbelohde-Typ, aufweist,
0,001 Masseteilen bis 2 Masseteilen (B) eines Antioxidans,
wobei andere Komponenten als die Komponente (A) und die Komponente (B) jeweils 10 Masseteile oder weniger, bezogen auf 100 Masseteile der Komponente (A), ausmachen: 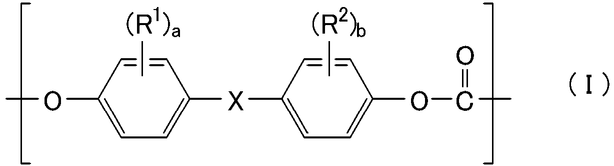 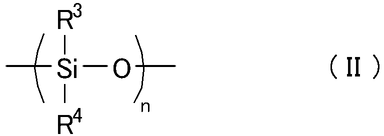 worin:
R¹ und R² jeweils unabhängig voneinander für ein Halogenatom, eine Alkylgruppe mit 1 bis 6 Kohlenstoffatomen oder eine Alkoxygruppe mit 1 bis 6 Kohlenstoffatomen stehen, X für eine Einfachbindung, eine Alkylengruppe mit 1 bis 8 Kohlenstoffatomen, eine Alkylidengruppe mit 2 bis 8 Kohlenstoffatomen, eine Cycloalkylengruppe mit 5 bis 15 Kohlenstoffatomen, eine Cycloalkylidengruppe mit 5 bis 15 Kohlenstoffatomen, eine Fluorendiylgruppe, eine Arylalkylengruppe mit 7 bis 15 Kohlenstoffatomen, eine Arylalkylidengruppe mit 7 bis 15 Kohlenstoffatomen, -S-, -SO-, -SO₂-, -O- oder -COsteht, und a und b jeweils unabhängig voneinander für eine ganze Zahl von 0 bis 4 stehen; und
R³ und R⁴ jeweils unabhängig voneinander für ein Wasserstoffatom, ein Halogenatom, eine Alkylgruppe mit 1 bis 6 Kohlenstoffatomen, eine Alkoxygruppe mit 1 bis 6 Kohlenstoffatomen oder eine Arylgruppe mit 6 bis 12 Kohlenstoffatomen stehen, und n für eine durchschnittliche Anzahl von Wiederholungen steht.

2. Polycarbonatharzzusammensetzung gemäß Anspruch 1, wobei das als Komponente (B) dienende Antioxidans ein phosphorbasiertes Antioxidans umfasst.

3. Formkörper, hergestellt durch Formen der Polycarbonatharzzusammensetzung gemäß Anspruch 1 oder 2.

4. Gehäuse für tragbare Informationsterminals, umfassend den Formkörper gemäß Anspruch 3.

5. Schutzhülle für tragbare Informationsterminals, umfassend den Formkörper gemäß Anspruch 3.

6. Verwendung der Polycarbonatharzzusammensetzung, wie in Anspruch 1 oder 2 definiert, zur Herstellung eines Formkörpers.

7. Verwendung gemäß Anspruch 6, wobei der Formkörper ein Element für tragbare Informationsterminals oder eine Schutzhülle ist.

## Revendications

1. Composition de résine polycarbonate présentant une résistance d'écran solaire, comprenant un mélange de :
100 parties en masse (A) d'une résine polycarbonate comprenant un copolymère de polycarbonate-polyorganosiloxane (A-1) comprenant, dans une chaîne principale de celui-ci, un motif de répétition représenté par la formule générale (I) et un motif de répétition représenté par la formule générale (II), dans laquelle n = 30 à 150, le composant (A) présentant une teneur du motif de répétition représenté par la formule générale (II) de 1,1 % en masse à 2,9 % en masse, et le composant (A) présentant un poids moléculaire moyen en viscosité de 19 500 à 24 000, calculé à partir de l'équation de Schnell, [η] = 1,23x10⁻⁵×Mv^{0,83}, en mesurant la viscosité limite [η] d'une solution de chlorure de méthylène à 20 °C dans un tube viscosimétrique de type Ubbelohde,
0,001 partie en masse à 2 parties en masse (B) d'un antioxydant,
dans laquelle d'autres composants autres que le composant (A) et le composant (B) sont chacun de 10 parties en masse ou moins par rapport à 100 parties en masse du composant (A) : 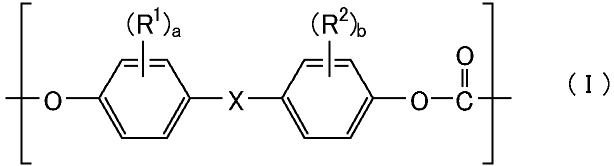 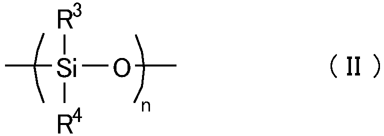 dans laquelle :
R¹ et R² représentent chacun indépendamment un atome d'halogène, un groupe alkyle présentant 1 à 6 atomes de carbone ou un groupe alcoxy présentant 1 à 6 atomes de carbone, X représente une liaison simple, un groupe alkylène présentant 1 à 8 atomes de carbone, un groupe alkylidène présentant 2 à 8 atomes de carbone, un groupe cycloalkylène présentant 5 à 15 atomes de carbone, un groupe cycloalkylidène présentant 5 à 15 atomes de carbone, un groupe fluorènediyle, un groupe arylalkylène présentant 7 à 15 atomes de carbone, un groupe arylalkylidène présentant 7 à 15 atomes de carbone, -S-, -SO-, -SO₂-, -O- ou -CO-, et a et b représentent chacun indépendamment un nombre entier de 0 à 4 ; et
R³ et R⁴ représentent chacun indépendamment un atome d'hydrogène, un atome d'halogène, un groupe alkyle présentant 1 à 6 atomes de carbone, un groupe alcoxy présentant 1 à 6 atomes de carbone, ou un groupe aryle présentant 6 à 12 atomes de carbone, et n représente un nombre moyen de répétitions.

2. Composition de résine polycarbonate selon la revendication 1, dans laquelle l'antioxydant servant de composant (B) comprend un antioxydant à base de phosphore.

3. Corps moulé, qui est produit par moulage de la composition de résine polycarbonate selon la revendication 1 ou 2.

4. Boîtier pour terminaux d'information portables, comprenant le corps moulé selon la revendication 3.

5. Boîtier de protection pour terminaux d'information portables, comprenant le corps moulé selon la revendication 3.

6. Utilisation de la composition de résine polycarbonate telle que définie dans la revendication 1 ou 2 pour produire un corps moulé.

7. Utilisation selon la revendication 6, dans laquelle le corps moulé est un élément pour terminaux d'information portables ou un boîtier de protection.
